# DEMANDE DE BREVET EUROPEEN

(11) **EP 2 706 048 A1**
(43) Date de publication de la demande: **12.03.2014**
(21) Numéro de dépôt: 13306211.7
(22) Date de dépôt: 05.09.2013
(51) Int. Cl.: C04B 33/24, B28B 3/00, C04B 35/622, B44C 1/22, B44F 1/06

(54) **Procédé et dispositif de réalisation d'une pièce en céramique, notamment en porcelaine**

(30) Priorité: 06.09.2012 FR 1258313
(71) Demandeur: Jaune de Chrome, 75008 Paris (FR)
(72) Inventeur: LE PAGE, Christian, 45170 TIVERNON (FR); TRACCARD, Pierre, 87240 AMBAZAC (FR)
(74) Mandataire: Fantin, Laurent

(57) **Abrégé**

L'objet de l'invention est un procédé de réalisation d'une pièce en céramique, notamment un carreau en porcelaine, caractérisé en ce qu'il comprend les étapes suivantes :
- préparation d'une composition de poudres minérales,
- mise en forme de cette composition selon la forme de la pièce rectangulaire avec des dimensions brutes L_{B} × I_{B} × E_{B} supérieures à celles des dimensions finales L_{F} × I_{F} × E_{F} du produit
- usinage de la pièce aux dimensions L_{U} × I_{U} × Eu incluant les retraits ε, δ et σ prévus à la cuisson,
- cuisson au four suivant les caractéristiques de la composition de poudres,
- obtention de la pièce en porcelaine cuite aux dimensions finales L_{F} × I_{F} × E_{F}.

L'invention couvre aussi le dispositif associé.

## Description

La présente invention concerne le domaine des pièces réalisées en céramique, plus particulièrement en porcelaine. La présente invention concerne aussi le dispositif associé ainsi que ses accessoires.

On entend pour la suite de la demande par "céramique" les céramiques de façon générale à savoir les grès, les pièces en terre cuite, les faïences et plus spécialement les porcelaines qui présentent certaines contraintes supplémentaires notamment du fait qu'il s'agit de pièces obtenues à partir d'une pâte imperméable et à sa très forte propension à la déformation lors de sa cuisson, liée à une quantité importante de phase vitreuse développée en cours de cuisson.

Si l'on se base sur les pièces susceptibles de poser le plus de problèmes techniques, on comprend que les procédé et dispositif indiqués ci-après puissent être transposables techniquement aux autres produits de la famille des céramiques.

Un problème particulier des pièces en porcelaine, c'est qu'elles sont très difficiles à usiner après cuisson. Ces pièces nécessitent des moyens lourds d'une part avec des risques d'éclatement par surchauffe lors des découpes ou des usinages d'autre part. De plus, des tels usinages engendrent des risques d'écaillage de l'émail pour les pièces émaillées.

Les pièces en porcelaine sont utilisées dans les arts de la table depuis des siècles car on connaît les exceptionnelles propriétés de ladite matière. En effet, une pièce en porcelaine est résistante mécaniquement mais aussi thermiquement. Une pièce en porcelaine supporte des températures négatives comme celles d'un congélateur mais aussi des températures élevées jusqu'à 300°C.

Du fait que la pâte utilisée pour la réalisation d'une pièce en porcelaine est imperméable, une pièce en porcelaine utilisée en extérieur n'est donc aucunement gél ive.

On peut réaliser en porcelaine des pièces de grandes dimensions à partir de moulages comme par exemple des fontaines. Dans ce cas, un avantage supplémentaire de la porcelaine est son état de surface qui, une fois émaillé ou satiné, est extrêmement lisse d'où sa très forte propension à rester propre surtout dans le cas d'une fontaine et dans tous les cas le nettoyage, quand il s'avère nécessaire, est remarquablement aisé.

La porcelaine est un matériau très particulier avec des propriétés exceptionnelles puisque l'on sait que la porcelaine en couche mince laisse passer la lumière. Qui plus est, la quantité de lumière présente un lien de proportionnalité avec l'épaisseur. C'est ainsi que l'on connaît les objets décoratifs dits lithophanies qui sont des pièces, généralement de révolution, moulées en creux sur la face extérieure et qui sont éclairées par une source lumineuse côté lisse, intérieur.

Ainsi lorsque la source est éteinte, la pièce en porcelaine présente une gravure en creux visible et décorative en elle-même et quand la source est allumée, la lumière génère une vue en relief du plus bel effet par translucidité.

Il est aussi indiqué ici que la porcelaine reste blanche après cuisson car le composé principal est du kaolin.

Tout ceci rappelé, on a constaté que les pièces en porcelaine sont restées à l'usage essentiel des arts de la table et de pièces spécifiques de décoration. Ces pièces ne nécessitent pas de précision dans la fabrication mais simplement une reproductibilité et des formes ajustées.

Un inconvénient de la porcelaine est le prix car la fabrication est délicate, notamment à cause des produits qui entrent dans la composition de la pâte, des températures élevées de cuisson, des cuissons multiples généralement au moins deux pour les pièces émaillées, et de la préparation des pièces tant en main d'oeuvre qu'en nombre d'étapes.

De plus, ainsi qu'indiqué ci-avant, les pièces en porcelaine subissent des déformations liées à la formation de phases vitreuses importantes lors de la cuisson ainsi que cela sera rappelé ultérieurement.

Néanmoins, pour certaines applications de luxe, il serait intéressant de prévoir une ouverture sur des marchés spécifiques tels que des revêtements muraux ou de sol pour citer un exemple simple mais qui fait apparaître toutes les difficultés de réalisation et les problèmes posés.

Si l'on analyse les problèmes posés, ils sont nombreux.

La porcelaine ne s'usine pas, donc tous les passages nécessaires, comme des trous par exemple pour des interrupteurs ou des passages de câbles, posent un problème.

De plus, une pièce en porcelaine présente un retrait à la cuisson qui rend difficile la reproductibilité avec une précision suffisante pour certaines applications comme un revêtement à partir de carreaux de porcelaines. Le retrait est de l'ordre de 10 à 15% pour donner un ordre d'idée. De plus le moulage présente également une précision toute relative pour le milieu industriel.

Il est rappelé que la porcelaine est réalisée généralement par coulage de la barbotine dans des moules en plâtre. La barbotine est la pâte liquide utilisée, essentiellement à base de kaolin, quartz et feldspath. Ces moules en plâtre absorbent l'eau et laissent la pièce en forme dite "verte" c'est-à-dire crue, mais assez rigide pour se tenir, avant cuisson.

Il existe un autre procédé qui est le coulage sous pression, l'objectif étant le même à savoir le retrait d'eau mais dans ce cas, c'est la pression qui extrait l'eau à travers des moules microporeux.

Le procédé dit de calibrage qui consiste à écraser un pâton de pâte de porcelaine, à consistance plastique, sur un moule en plâtre à l'aide d'un calibre rotatif, est utilisé pour certaines applications, notamment pour les formes de révolution.

Un dernier procédé, plus récent, consiste à recourir au pressage isostatique. De la poudre avec un très faible taux de siccité, est placée dans une enveloppe souple et soumise à une très forte pression dans toutes les directions, ceci au sein d'un fluide. Ce procédé trouve une application pour les pièces plates telles que des carreaux mais aussi pour d'autres pièces, notamment de révolution.

Un avantage de ce procédé de façonnage par pressage isostatique est l'obtention d'une pièce pressée avec un faible taux de siccité aux environs de 3%, ce qui conduit à un retrait moindre de l'ordre de 11 à 13% pour donner un ordre d'idée. La cuisson de la porcelaine est conduite à haute température pour atteindre la vitrification, soit au-delà de 1200°C, plutôt 1400°C pour les porcelaines dites dures.

Suivant les techniques, les pièces peuvent aussi subir une première cuisson vers 900°C pour obtenir une pièce dite "dégourdie" avant de subir une cuisson finale.

La description qui va suivre se base sur l'exemple de carreaux en porcelaine pour assurer une description simple et complète d'un mode de réalisation mettant en oeuvre le procédé selon la présente invention, ainsi que le dispositif associé et les accessoires nécessaires.

De même, le procédé vise une pièce obtenue par pressage isostatique pour la description du meilleur mode de réalisation retenu au jour de la dite description. Les procédé et dispositif selon la présente invention sont maintenant décrits en détail pour bien faire apparaître les solutions retenues pour résoudre les problèmes posés.

Afin d'illustrer le procédé et de mieux appréhender le dispositif, il est prévu des dessins, dessins sur lesquels les différentes figures représentent :
- Figure 1 : un synoptique du procédé selon l' invention, avec une vue de la pièce en porcelaine correspondante, à chaque étape, ladite pièce étant de forme simple, rectangulaire avec un trou en position centrée,
- Figure 2 : une vue générale du dispositif selon la présente invention,
- Figure 3 : une vue de l'accessoire essentiel, à savoir les moyens de préhension du carreau en porcelaine,
- Figure 4 : une vue d'un carreau en porcelaine avec une représentation en creux,
- Figure 5 : une vue d'un agencement éclairé du carreau en porcelaine de la figure 4 avec la disposition de l'éclairage côté en creux.

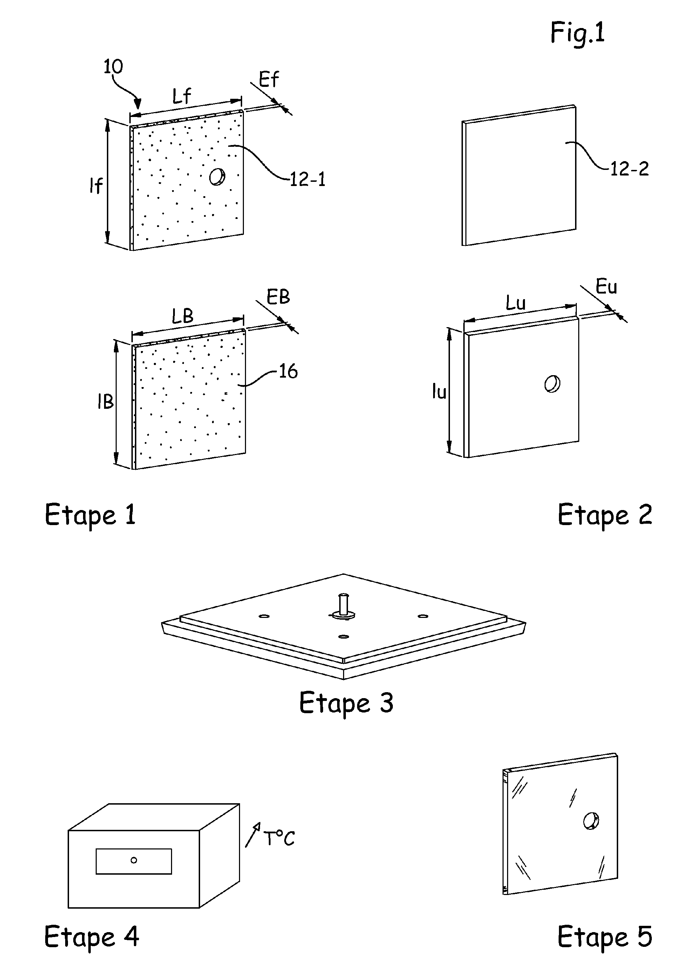

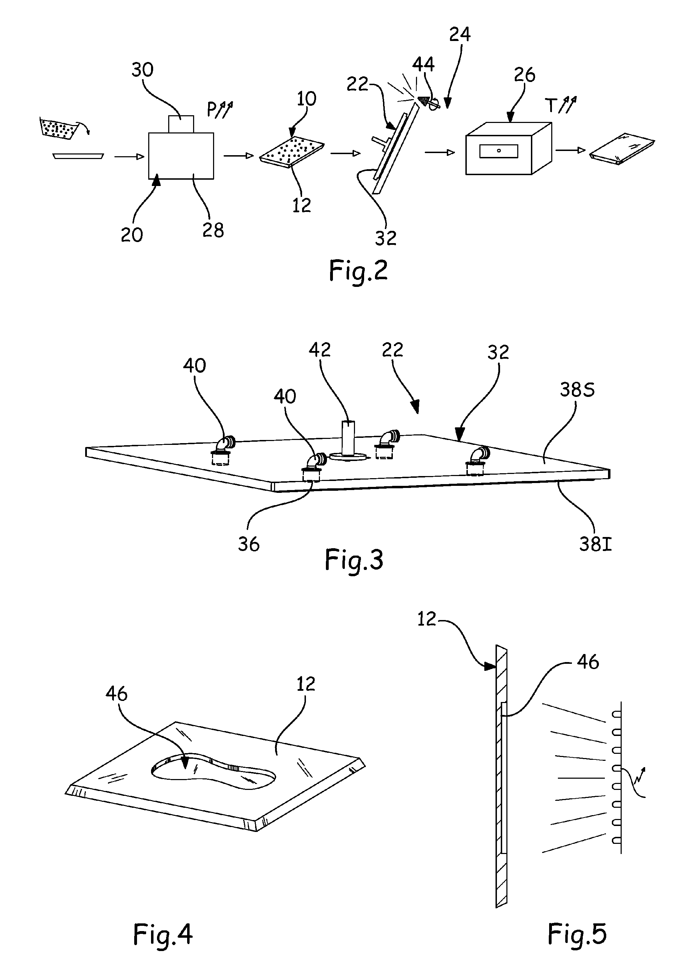

Le procédé selon la présente invention concerne la réalisation d'une pièce 10 de porcelaine, en l'occurrence un carreau 12-1 étant destiné à être juxtaposé avec un autre carreau 12-2. Voir figures 1 et 2.

De la poudre 14 à base de kaolin, quartz et feldspath est introduite dans une enveloppe 16 à la forme du carreau à obtenir, *Etape 1.*

Comme exemple, on peut citer une composition comprenant des poudres à granulométrie et hygrométrie contrôlées d'un ou plusieurs types de quartz, d'un ou plusieurs types de kaolin, d'un ou plusieurs types de feldspath, auxquelles est adjoint un ensemble de plastifiants et de liants. On peut ainsi donner la composition suivante :
- Kaolin 50%
- Quartz 25%
- Feldspath 25%
- Système de liant et plastifiant 2%.

Le pressage isostatique est effectué sous une pression de 280 à 310 bars, ce qui permet une agglomération mécanique des grains et donc une structuration de la pièce 10 en forme de carreau.

Dans l'exemple retenu pour la présente description, le carreau est rectangulaire. Pour que ce carreau ait des dimensions finales exactes, après cuisson, de :
L_{F} 36 cm × I_{F} 24 cm × E_{F} 0,75 cm, ce carreau doit présenter, avant cuisson, des dimensions supérieures à celles des dimensions du produit fini de façon à permettre un usinage de matière comme expliqué ci-après, tenant compte aussi des retraits.
Les dimensions brutes L_{B} 42,8 cm × I_{B} 29,3.cm × E_{B} 0,85 cm retenues en sortie de pressage doivent être supérieures aux dimensions usinées L_{U} 41,1cm × I_{U} 27,3 cm × E_{U} 0,85 cm en sortie d'usinage comme indiqué ci-après, dimensions qui doivent inclure les variations liées aux retraits lors de la cuisson. On note que l'épaisseur ne fait pas l'objet d'un usinage car il ne s'avère pas nécessaire sur des dimensions aussi faibles, il suffit donc de prévoir le retrait. On travaille en "brut" d'épaisseur car cette dimension n'est pas critique dans le cas de carreaux, le collage assurant la compensation éventuelle des variations d'épaisseurs.

Aussi les dimensions usinées du carreau tiennent compte et incluent des retraits à venir lors de la cuisson qui sont de :
- ε = 5,1 cm pour la longueur L,
- δ = 3,3 cm pour la largeur I, et
- σ = 0,1 cm pour l'épaisseur E.

En effet, selon le procédé de l'invention, il est prévu un usinage de la pièce en "vert", c'est-à-dire avant cuisson, juste après le pressage isostatique, *Etape 2.* Cette étape d'usinage permet de mettre le carreau 12 aux dimensions nécessaires et précises : L_{U} × I_{U} × E_{U}. Il faut donc que les dimensions brutes soient supérieures à L_{B} × I_{B} × E_{B} pour permettre un usinage satisfaisant, c'est-à-dire que l'enlèvement de matière puisse être réalisé sans difficulté.

De plus, dans certains cas, il peut s'avérer nécessaire de prévoir un angle de dépouille sur la périphérie du carreau, sur la tranche. Un tel angle de dépouille peut trouver un intérêt lors de la pose à joints fins ou sans joints. Ceci permet aussi d'éviter des retours d'émail sur les bords qui seraient nuisibles au bon jointoiement, avec joint fin ou sans joint.

Cet angle de dépouille est tel que la face visible est d'une surface plus importante sur la face inférieure destinée à être collée.

Suivant les besoins, le carreau peut comporter un ou plusieurs trous ou une ou plusieurs découpes pour le passage d'une alimentation électrique par exemple et dans ce cas, le trou et/ou la découpe sont également ménagés sur le carreau en "vert".

On note que la pièce en "vert" constituant le carreau autorise l'usinage mais sa consistance, sa texture, sa tenue mécanique restent très limitées et nécessitent une manipulation très délicate, ce qui a dissuadé les procédés connus de l'art antérieur d'intégrer une étape d'usinage.

Par contre il convient de saisir et de maintenir le carreau qui a un ratio longueur-largeur / épaisseur très important, ceci tout en conservant la planéité dudit carreau, y compris durant l'usinage, *Etape 3.*

A cet effet, il est nécessaire de prévoir des moyens de préhension adaptés en l'occurrence une plaque de préhension adaptée. Un mode de réalisation d'une telle plaque de préhension est décrit plus avant.

Une fois le carreau usiné en "vert", le carreau est cuit au four suivant un profil de chauffe adapté à la pâte et connu en lui-même, à la portée de l'homme de l'art, *Etape 4.*

Le retrait de la pâte aux conditions de cuisson établies permet de déterminer exactement le retrait avec une précision de l'ordre de quelques dixièmes de millimètres.

Bien entendu, il est nécessaire de prévoir le différentiel de retrait suivant les axes longitudinaux et transversaux lorsque le carreau est rectangulaire.

Le carreau ainsi obtenu présente en sortie de four les dimensions L_{F} × I_{F} × E_{F} recherchées, avec une précision de l'ordre de 0,1 à 0,2 %, *Etape 5.*

Le procédé de réalisation d'une pièce en céramique, notamment en porcelaine, comprend les étapes suivantes :
- préparation d'une composition de poudres minérales,
- mise en forme de cette composition selon la forme de la pièce avec des dimensions brutes supérieures à celles des dimensions finales du produit,
- usinage de la pièce à des dimensions usinées aux dimensions finales auxquelles sont ajoutés les retraits prévus à la cuisson,
- cuisson au four suivant les caractéristiques de la composition de poudre,
- obtention de la pièce en porcelaine cuite aux dimensions finales.

Le procédé selon l'invention peut subir une modification car dans certaines applications, on peut passer par une phase dite de première cuisson qui conduit à l'obtention d'un dégourdi, c'est-à-dire à l'obtention d'un carreau qui a perdu son eau mais qui n'a pas subi encore la transformation complète à haute température pour devenir une porcelaine, ce qui lui permet d'être encore poreux pour absorber la glaçure.

Le dégourdi est apte à recevoir un glaçage, un vernissage, un décor qui sera cuit simultanément au carreau lui-même.

Le dégourdi ainsi obtenu présente l'avantage d'être mécaniquement plus résistant et peut donc être manipulé un peu plus aisément que le produit "vert" tout en restant très fragile. Lors de l'étape d'usinage de la pièce en dégourdi, on ménage au moins un trou ou une découpe dans la pièce.

Les carreaux, du fait de la précision obtenue, peuvent ainsi être posés bord à bord par exemple.

Sur la figure 2, on a représenté le dispositif dans son ensemble, permettant la mise en oeuvre du procédé qui vient d'être décrit. Ce dispositif comprend une unité 20 de pressage isostatique, des moyens 22 de préhension, des moyens 24 d'usinage et des moyens 26 de cuisson.

L'unité de pressage isostatique, utilisée dans le meilleur mode de réalisation, comporte une cellule 28 de mise en pression, des moyens 30 de mise en pression de ladite cellule 28.

En sortie de pressage, la pièce 10, en l'occurrence le carreau 12 dans l'exemple retenu, est repris par les moyens 22 de préhension qui sont constitués d'une plaque de préhension 32 solidaire d'un bras d'un robot par exemple, le robot étant de type connu.

Cette plaque de préhension 32 doit présenter une rigidité très importante afin de ne pas déformer le carreau d'une part et nuire à la précision mais elle doit aussi être très légère afin que les moyens de préhension restent de taille raisonnable, le poids limité réduisant simultanément l'inertie liée au poids de la plaque de préhension lors des déplacements.

Une telle plaque de préhension 32 sera avantageusement réalisée en carbone.

Sur la figure 3, on a représenté ladite plaque de préhension 32 parfaitement plane, comprenant 4 trous 36 traversants d'aspiration. Ces trous sont répartis sur la surface de la plaque de préhension et débouchent sur la surface inférieure 38I en contact avec la pièce "verte" sortie de pressage. On note que les trous sont de petits diamètre de l'ordre du centimètre, ce qui permet d'éviter toute déformation au droit de l'aspiration. Des connexions 40 d'alimentation en air sous pression négative sont prévues sur la face supérieure 38S, opposée à la face en contact avec la pièce.

Il serait possible de prévoir des canaux reliant ces trous pour augmenter la surface en dépression si nécessaire mais en l'occurrence les quatre trous suffisent. Au moins un trou pourrait aussi être prévu mais l'équilibrage est plus délicat.

En périphérie de la plaque de préhension, il est aussi prévu un lamage de façon à disposer si cela s'avère nécessaire un joint compressible. Ce joint peut s'avérer nécessaire pour amorcer la dépression en faisant une première étanchéité et en constituant une "ventouse" dans le cas d'un carreau tel que décrit pour illustrer un mode de réalisation..

Une fois la pièce 10 plaquée contre la plaque 32 de préhension sous l'effet de la dépression générée au droit des trous, le joint n'a plus aucun effet.

En partie centrale, une liaison 42 est solidaire de la plaque de préhension 32 et plus particulièrement de la face 38S supérieure.

Les moyens 24 d'usinage tels que représentés comportent de façon schématique et connue une broche 44 d'usinage, mobile suivant trois axes. Dans le mode représenté, c'est la pièce qui est fixe et l'outil qui se déplace mais il serait possible de façon totalement équivalente de disposer d'une broche d'usinage fixe et de présenter la pièce maintenue sur sa plaque de préhension devant l'outil, manipulée par exemple par un robot programmé.

Les moyens 26 de cuisson comprennent un four de type four au gaz naturel avec un pilotage des températures et de l'atmosphère, de façon à permettre d'atteindre des températures de 1200°C à 1400°C.

La pièce de porcelaine ainsi obtenue présente une précision de l'ordre 0,2 à 0,3% par rapport aux cotes initialement données.

La pièce de porcelaine ainsi obtenue, en conservant comme exemple le carreau peut aussi faire l'objet d'un usinage en creux, donc en 3D, d'une image 46. Cet usinage est borgne, non débouchant, et réalisé dans l'épaisseur du carreau qui est déjà d'une faible épaisseur. Cet usinage peut correspondre à une image en nuances de gris la profondeur étant inversement proportionnelle à l'intensité des gris. Plus la zone doit être claire plus elle est creusée.

Cette image 46 est donc rapportée en creux comme dans une lithophanie. Voir la coupe figure 4.

Le travail est réalisé par un robot piloté par une commande adaptée qui analyse l'image et transforme l'intensité de l'image de façon inversement proportionnelle en profondeur. On entend par image toute forme géométrique ou non, des textes, des représentations graphiques.

Les propriétés mécaniques de la porcelaine permettent de réaliser un carreau avec une résistance mécanique suffisante pour permettre de le rapporter sur un support sans casser, qu'il s'agisse d'un sol ou d'un mur.

Comme montré sur la figure 5, le carreau est posé avec la face usinée en creux côté source de lumière. Ainsi, une fois posé sur un support par exemple un mur, le carreau est totalement opaque, blanc, éventuellement revêtu d'une couche de satin ou de tout autre émaillage transparent ou au moins translucide. L'image 46 n'est donc aucunement visible.

La pièce peut ainsi subir un traitement de surface.

Si la source lumière est mise en service, comme elle se situe du côté image, alors l'image apparaît à travers le carreau et se trouve visible du côté lisse, non usiné, du carreau.

Les platines éclairantes comportant des sources lumineuses multiples du type diodes électroluminescentes, DEL, sont parfaitement adaptées car ces diodes sont d'une très faible épaisseur, ne chauffent pas et génèrent une forte puissance lumineuse avec une faible consommation énergétique.

De plus, les diodes électroluminescentes, DEL, ont une température de couleur dans les blancs de 5000 à 6000°K, ce qui correspond à des blancs froids ou neutres, température de couleur qui magnifie la blancheur de la porcelaine.

Cet agencement avec un éclairage du côté image est réellement un préjugé vaincu car la définition se trouve un peu altérée du fait que les profils sont vus à travers une épaisseur de porcelaine tandis qu'avec l'éclairage du côté opposé, la lumière traversante éclaire les bords usinés de l'image qui sont directement visibles si bien que le trait est en haute définition comme dans le cas des lithophanies traditionnelles. Néanmoins, pour des applications envisagées qui sont, non pas des arts de la table ou des objets décoratifs qui sont visibles de près et observés à faible distance, mais des revêtements muraux la définition est largement suffisante et procure des effets technique et décoratif surprenants.

On note que les carreaux peuvent être montés sans joint, uniquement avec un liant sur la face en regard du support, la précision étant suffisante et la rectitude des bords est également suffisante.

En cas de support mural ou au sol, les évidements nécessaires, réalisés avant cuisson finale, en "vert" ou sur dégourdi, sont également d'une grande précision si nécessaire. Ceci permet d'éviter l'usinage postérieur qui est impossible sur la pièce en porcelaine finie.

Les pièces peuvent être décorées en fonction des besoins, sans limitation.

Les pièces réalisées suivant le procédé de la présente invention peuvent trouver d'autres applications dans la réalisation de fresques murales mais il pourrait aussi être utilisé dans les arts de la table pour réaliser des assiettes ou tasses en porcelaine, des balisages extérieurs éclairés, des reproductions d'oeuvres.

## Revendications

1. Procédé de réalisation d'une pièce en céramique, notamment en porcelaine, **caractérisé en ce qu'il** comprend les étapes suivantes :
- préparation d'une composition de poudres minérales,
- mise en forme de cette composition selon la forme de la pièce avec des dimensions brutes supérieures à celles des dimensions finales du produit,
- usinage de la pièce à des dimensions usinées aux dimensions finales auxquelles sont ajoutés les retraits prévus à la cuisson,
- cuisson au four suivant les caractéristiques de la composition de poudre,
- obtention de la pièce en céramique cuite aux dimensions finales.

2. Procédé de réalisation d'une pièce en céramique, notamment en porcelaine, selon la revendication 1, **caractérisé en ce que** la pièce est usinée en "vert".

3. Procédé de réalisation d'une pièce en céramique, notamment en porcelaine, selon la revendication 1, **caractérisé en ce que** la pièce est usinée en dégourdi après une première cuisson.

4. Procédé de réalisation d'une pièce en céramique, notamment en porcelaine, selon la revendication 1, 2 ou 3, **caractérisé en ce que** la mise en forme est obtenue par pressage isostatique.

5. Procédé de réalisation d'une pièce en céramique, notamment en porcelaine, selon l'une quelconque des revendications précédentes, **caractérisé en ce que** lors de l'étape d'usinage de la pièce en "vert" ou en dégourdi, on ménage au moins un trou ou une découpe dans la pièce.

6. Procédé de réalisation d'une pièce en céramique, notamment en porcelaine, selon l'une quelconque des revendications précédentes, **caractérisé en ce que** l'on fait subir à la pièce un traitement de surface.

7. Procédé de réalisation d'une pièce en céramique, notamment en porcelaine, selon l'une quelconque des revendications précédentes, **caractérisé en ce que** l'usinage consiste à réaliser un usinage en creux, en 3D, d'une image, cet usinage étant borgne.

8. Utilisation d'une pièce en céramique, notamment en porcelaine, obtenue par la mise en oeuvre de la revendication 7, **caractérisée en ce que** l'on dispose un éclairage destiné à éclairer la face usinée en creux de façon à obtenir une image éclairée du côté non usiné.

9. Dispositif pour la mise en oeuvre du procédé selon l'une des revendications 1 à 7, **caractérisé en ce qu'il** comprend une unité (20) de pressage isostatique, des moyens (22) de préhension, des moyens (24) d'usinage et des moyens (26) de cuisson.

10. Dispositif pour la mise en oeuvre du procédé selon la revendication 9, **caractérisé en ce que** les moyens (22) de préhension comprennent une plaque de préhension (32).

11. Dispositif pour la mise en oeuvre du procédé selon la revendication 10, **caractérisé en ce que** la plaque de préhension (32) comprend une plaque plane de forte rigidité avec au moins un trous relié à une source d'air en dépression.

12. Pièce en céramique obtenue selon le procédé des revendications 1 à 7 et par mise en oeuvre du dispositif selon les revendications 9 à 11, **caractérisée en ce qu'**elle présente une précision par rapport aux cotes finales, comprise entre 0,2 et 0,3 %.
